# EUROPEAN PATENT SPECIFICATION

(11) **EP 0 279 861 B1**
(45) Date of publication and mention of the grant of the patent: **15.12.1993**
(21) Application number: 87905277.7
(22) Date of filing: 07.08.1987
(51) Int. Cl.: C04B 35/58

(54) **BORON NITRIDE SINTER AND PROCESS FOR ITS PRODUCTION**
BORONNITRID-SINTER UND VERFAHREN ZUR HERSTELLUNG
AGGLOMERE DE NITRURE DE BORE ET SON PROCEDE DE PRODUCTION

(30) Priority: 07.08.1986 JP 186459/86
(43) Date of publication of application: 31.08.1988
(73) Proprietor: KABUSHIKI KAISHA KOURANSHA, Saga-ken 844 (JP)
(72) Inventor: NAKASHIMA, Masazumi, Tachibana-cho, Imari-shi Saga-ken 848 (JP); NAKAMURA, Hiroshi, Nishimatsuura-gun Saga-ken 844 (JP); KURITA, Sumihiko, Yamauchi-cho, Kishima-gun Saga-ken (JP)
(74) Representative: Silverman, Warren
(86) International application number: PCT/JP87/00592
(87) International publication number: WO 88/00934

(56) References cited:
- DE-A- 1 571 615
- DE-B- 1 210 370
- JP-A- 6 259 573
- JP-A-61 117 107

## Description

This invention relates to a boron nitride sintered article consisting entirely of boron nitride or consisting of boron nitride and another ceramic component or components, and more particularly to a process for the production thereof.

Boron nitride powder (hereinafter called simply BN) has very poor sinterability. Therefore it is a common practice that a minute amount of one or more oxides such as B₂O₃, CaO, etc. is added to a BN powder as a sintering auxiliary and a BN sintered article is obtained by hot-pressing the mixture. According to this production process in the prior art, not only is it difficult to obtain a BN sintered article of high purity, but also it is almost impossible to obtain an article of complex shape. Moreover production costs are relatively high. For example JP-A-61 117107 specifically discloses the hot pressing of amorphous boron nitride to produce a sintered body of increased density of the order of 80 % of theoretical. Moreover DE-B-1210370, requires addition of γ-Al₂O₃ and Al powder as sintering auxiliaries in obtaining boron nitride shaped bodies of sufficient strength.

It is an object of this invention to provide a BN sintered article of complex shape having a high purity and a high mechanical strength by means of normal pressure sintering.

According to one aspect of this invention, there is provided a process for production of a boron nitride-containing sintered article which comprises making up a boron nitride-containing powder comprising amorphous boron nitride, forming from said powder an article having the shape of the article to be produced and subjecting said article to sintering, characterised in that the boron nitride-containing powder contains amorphous boron nitride in an amount of at least 5 weight % based on the total amount of boron nitride present and sintering is carried out under a pressure which approximates to ambient atmospheric pressure and under a reducing nitriding atmosphere to produce a product having a density of 1.2 - 1.9 g/cm³ and a bending strength of 3 - 8 kgf/mm².

In a second aspect, this invention provides a process for the production of a boron nitride-containing sintered article, characterised in that a starting powder is provided comprising a substance which is capable of producing amorphous boron nitride under sintering conditions which include a reducing nitriding atmosphere, which substance is present in an amount such that the amorphous boron nitride which is produced constitutes at least 5 weight % of the total amount of boron nitride then present, and the starting powder is formed into the shape of said article, and in that the shaped article is subjected to sintering under a pressure which approximates to ambient atmospheric pressure and under a reducing nitriding atmosphere to produce a product having a density of 1.2 - 1.9 g/cm³ and a bending strength of 3 - 8 kgf/mm².

This invention is based on the following observations:
1. If an amorphous BN powder or a powder comprising a substance capable of producing amorphous BN in the course of the sintering step is present in the starting material, then a sintered article having a high density and a high mechanical strength can be obtained through normal pressure sintering carried out without making use of a sintering auxiliary.
2. The entire BN component can be constituted by the above-described amorphous BN powder or a powder capable of producing substantially entirely amorphous BN.
3. The amount of amorphous BN powder or of powder capable of producing amorphous BN present in starting material for the BN component is chosen to be such that the amorphous BN constitutes 5 weight % or more of the BN present in the powder which is sintered.

While a BN sintered article having a density of 1.9 g/cm³ and a bending strength of 4-7 kgf/mm² is obtained by a hot-pressing sintering procedure in the prior art, according to the present invention a BN sinter having a density of 1.2-1.9 g/cm³ and a bending strength of 3-8 kgf/mm² can be obtained. Hitherto it has been thought that in order to increase the strength of a sintered article it was essential to increase its density. However, according to the present invention, it has become possible to increase the strength of a sintered article without always needing to increase the density.

The characteristic feature of the present invention resides in the fact that either at least 5 weight % of the BN component serving as a starting material is an amorphous BN powder or a powder is used which is capable of producing in the sintering step amorphous BN to an extent of at least 5 % of the boron nitride then present. The reason for this is because when there is less that 5 weight % of amorphous BN present, the strength of the sintered article produced is often too small to be of practical value.

A representative example of a powder capable of producing amorphous BN in the course of the sintering step is boron (B) powder. If boron is heated in a nitriding atmosphere, it is transformed into amorphous BN at a relative low temperature, and if the temperature rises further the BN is converted to stable crystalline BN. Therefore, because boron is transformed into amorphous BN at a temperature lower than the sintering temperature, the sintering reaction will proceed substantially the same as when sintering amorphous BN powder was present from the outset.

It is to be noted that when mixing other ceramic materials (for instance silicon nitride, aluminium nitride, silicon carbide, or oxides such as alumina) in with the BN, the amount of the other ceramic materials mixed in is limited to less than 50 weight %, whereby the properties as the boron nitride ceramics can be ensured.

The following examples illustrate this invention:

### Example 1

A starting material powder having the following composition was prepared;

| | |
|---|---|
| crystalline BN powder | 5 parts by weight |
| amorphous BN powder | 95 parts by weight |

This starting material powder was press-shaped into a plate having dimensions of 50 x 50 x 10 mm. The plate was sintered in a reducing nitriding atmosphere (NH₃ + N₂ gas atmosphere) at ambient atmospheric pressure, at a temperature of 1700^{o}C.

The sintered articles obtained had a density of 1.6 g/cm³ and a bending strength of 5 kgf/mm². In this connection, the material properties of a hot-processed product according to the prior art were a density of 1.8 g/cm³ and a bending strength of 7 kgf/mm². Thus compared to this prior art product, it can be seen that a product produced by a process embodying this invention which was sintered at ambient atmospheric pressure has sufficiently good properties for practical use.

### Example 2

A starting material powder having the following composition was prepared:

| | |
|---|---|
| crystalline BN powder | 60 parts by weight |
| amorphous boron powder | 40 parts by weight |

This above starting material was press-shaped into a plate having dimensions of 50 x 50 x 10 mm. The plate was sintered in a reducing nitriding atmosphere (NH₃ + N₂ gas atmosphere) at ambient atmospheric pressure, at a temperature of 1700^{o}C.

The sintered article obtained had a density of 1.7 g/cm³ and a bending strength of 6 kgf/mm².

In summary, thus, the present invention enables there to be produced a boron nitride sintered article having a high strength even by carrying out sintering at ambient atmospheric pressure. The boron nitride sintered article produced can have a complex configuration without compromising the sintering technique. Thus boron nitride sintered articles can be produced by the process according to the present invention which are electronic components of various types.

## Claims

1. A process for production of a boron nitride-containing sintered article which comprises making up a boron nitride-containing powder comprising amorphous boron nitride, forming from said powder an article having the shape of the article to be produced and subjecting said article to sintering, characterised in that the boron nitride-containing powder contains amorphous boron nitride in an amount of at least 5 weight % based on the total amount of boron nitride present and sintering is carried out under a pressure which approximates to ambient atmospheric pressure and under a reducing nitriding atmosphere to produce a product having a density of 1.2 - 1.9 g/cm³ and a bending strength of 3 - 8 kgf/mm².

2. A process as claimed in Claim 1, wherein the boron nitride-containing powder consists substantially entirely of amorphous boron nitride.

3. A process as claimed in Claim 1, wherein the boron nitride-containing powder contains boron nitride and less than 50 % by weight of ceramic material other than boron nitride.

4. A process as claimed in Claim 3, wherein said ceramic material is selected from silicon nitride, aluminium nitride, silicon carbide and ceramic oxides.

5. A process for the production of a boron nitride-containing sintered article, characterised in that a starting powder is provided comprising a substance which is capable of producing amorphous boron nitride under sintering conditions which include a reducing nitriding atmosphere, which substance is present in an amount such that the amorphous boron nitride which is produced constitutes at least 5 weight % of the total amount of boron nitride then present, and the starting powder is formed into the shape of said article, and in that the shaped article is subjected to sintering under a pressure which approximates to ambient atmospheric pressure and under a reducing nitriding atmosphere to produce a product having a density of 1.2 - 1.9 g/cm³ and a bending strength of 3 - 8 kgf/mm².

6. A process as claimed in Claim 5, wherein said starting powder consists substantially entirely of a material capable of forming substantially entirely amorphous boron nitride under said sintering conditions.

## Patentansprüche

1. Verfahren zur Herstellung von Bornitrid-haltigen Sintern, umfassend das
Zubereiten eines Bornitrid-haltigen Pulvers mit amorphem Bornitrid,
Formen eines Gegenstands aus dem Pulver, der die Form des herzustellenden Gegenstands besitzt und
Unterwerfen des Gegenstands einem Sintern, dadurch gekennzeichnet, daß
das Bornitrid-haltige Pulver mindestens 5 Gew.%, amorphes Bornitrid enthält, bezogen auf das Gesamtgewicht des vorliegenden Bornitrids, und
das Sintern bei etwa Umgebungsdruck und unter reduzierender Atmosphäre erfolgt,
so daß ein Produkt mit einer Dichte von 1,2 bis 1,9 g/cm³ und einer Biegefestigkeit von 3 bis 8 kgf/mm² erhalten wird.

2. Verfahren nach Anspruch 1, wobei das Bornitrid-haltige Pulver im wesentlichen vollständig aus amorphem Bornitrid besteht.

3. Verfahren nach Anspruch 1, wobei das Bornitrid-haltige Pulver Bornitrid und zu weniger als 50 Gew.% ein Keramikmaterial enthält, das nicht Bornitrid ist.

4. Verfahren nach Anspruch 3, wobei das Keramikmaterial ausgewählt ist aus Siliciumnitrid, Aluminiumnitrid, Siliciumcarbid und Keramikoxiden.

5. Verfahren zur Herstellung von Bornitrid-haltigen Sintern, dadurch gekennzeichnet, daß
ein Ausgangsmaterial bereitgestellt wird, das eine Substanz enthält, die unter Sinterbedingungen, welche eine reduzierende nitridbildene Atmosphäre umfassen, amorphes Bornitrid bilden kann,
die Substanz in einer Menge vorliegt, daß das gebildete amorphe Bornitrid mindestens 5 Gew.% der dann vorliegenden Gesamtmenge Bornitrid ausmacht,
das Ausgangspulver zu dem Gegenstand geformt wird,
der Formgegenstand bei etwa Umgebungsdruck und unter einer reduzierenden nitridbildenden Atmosphäre zu einem Produkt gesintert wird, das eine Dichte von 1,2 bis 1,9 g/cm³ und eine Biegefestigkeit von 3 bis 8 kgf/mm² besitzt.

6. Verfahren nach Anspruch 5, wobei das Ausgangspulver im wesentlichen vollständig aus einem Material besteht, das bei diesen Sinterbedingungen im wesentlichen vollständig amorphes Bornitrid ergibt.

## Revendications

1. Procédé de fabrication d'une pièce frittée contenant du nitrure de bore, qui comprend la préparation d'une poudre contenant du nitrure de bore, y compris du nitrure de bore amorphe, le moulage de ladite poudre en un corps ayant la forme de la pièce à produire, et le fait de soumettre ledit corps à une opération de frittage, **caractérisé** en ce que la poudre contenant du nitrure de bore contient une quantité de nitrure de bore amorphe représentant au moins 5 % en poids de tout le nitrure de bore présent, et en ce qu'on effectue le frittage sous une pression approximativement égale à la pression atmosphérique ambiante et sous une atmosphère nitrurante et réductrice, pour obtenir un produit présentant une masse volumique de 1,2 à 1,9 g/cm³ et une résistance à la flexion de 3 à 8 kgf/mm².

2. Procédé conforme à la revendication 1, dans lequel la poudre contenant du nitrure de bore est constituée pratiquement totalement de nitrure de bore amorphe.

3. Procédé conforme à la revendication 1, dans lequel la poudre contenant du nitrure de bore contient du nitrure de bore et moins de 50 % en poids d'un matériau céramique autre que du nitrure de bore.

4. Procédé conforme à la revendication 3, dans lequel ledit matériau céramique est choisi parmi du nitrure de silicium, du nitrure d'aluminium, du carbure de silicium et des oxydes céramiques.

5. Procédé de fabrication d'une pièce frittée contenant du nitrure de bore, **caractérisé** en ce que l'on prend une poudre de départ qui contient une substance capable, dans des conditions de frittage incluant une atmosphère nitrurante et réductrice, de donner du nitrure de bore amorphe, ladite substance étant présente en une quantité telle que le nitrure de bore amorphe produit représente au moins 5 % en poids de tout le nitrure de bore présent ensuite, on moule la poudre de départ en un corps ayant la forme de ladite pièce, et on soumet le corps moulé à un frittage, sous une pression approximativement égale à la pression atmosphérique ambiante et sous une atmosphère nitrurante et réductrice, pour obtenir un produit présentant une masse volumique de 1,2 à 1,9 g/cm³ et une résistance à la flexion de 3 à 8 kgf/mm².

6. Procédé conforme à la revendication 5, dans lequel ladite poudre de départ est pratiquement totalement constituée d'une substance capable, dans lesdites conditions de frittage, de former pratiquement totalement du nitrure de bore amorphe.
